Europäisches Patentamt

European Patent Office

Office européen des brevets

(11) Publication number: **0 430 591 A2**

## (12) EUROPEAN PATENT APPLICATION

(21) Application number: **90312746.2**

(22) Date of filing: **22.11.90**

(51) Int. Cl.⁵: **G02F 1/1347, G02F 1/1335**

(30) Priority: **22.11.89 JP 303730/89**
    **22.11.89 JP 303731/89**

(43) Date of publication of application:
    **05.06.91 Bulletin 91/23**

(84) Designated Contracting States:
    **DE FR GB Bulletin**

(71) Applicant: **SEL SEMICONDUCTOR ENERGY
    LABORATORY CO., LTD.
    398 Hase
    Atsugi-shi Kanagawa-ken 243(JP)**

(72) Inventor: **Watanabe, Toshio
    Coop Kawaguchi 202, 358-1, Tsumada
    Atsugi-shi, Kanagawa-ken 243(JP)**

(74) Representative: **Milhench, Howard Leslie et al
    R.G.C. Jenkins & Co. 26 Caxton Street
    London SW1H 0RJ(GB)**

(54) **Liquid crystal colour display device.**

(57) A liquid crystal color display device is disclosed which does not make use of optical color filters. The liquid crystal color display device comprises a nematic liquid crystal display panel, optical compensation means for converting the display from the display panel into a black and white display, and a liquid crystal color panel which has a voltage dependent transmissivity:wavelength characteristic. By selective application of appropriate voltages to the liquid crystals in the color panel a full color display can be derived from the black and white display, and compensation for ambient temperature changes can be effected by adjustment of the applied voltages.

EP 0 430 591 A2

## LIQUID CRYSTAL COLOR DISPLAY DEVICE

### BACKGROUND OF THE INVENTION

Field of the Invention

The present invention relates to a liquid crystal color display device.

Description of the Prior Art

There are various known types of liquid crystal display devices such as, for example, liquid crystal display devices of twisted nematic type (referred to as TN type hereinafter) which have been used for electric calculators and the like for many years, liquid crystal display devices of super twisted nematic type (referred to as STN type hereinafter) which have been used as larger sized display devices such as for word processors, ferroelectric liquid crystal display devices having high response speed which are now being researched, and so on.

In a liquid crystal display device of TN type, a pair of electrode bearing substrates having orientation surfaces thereon are disposed with a small spacing and liquid crystal material including optically active substances is interposed between the pair of electrode substrates. The orientation directions at the substrates are at an angle of 90° with respect to each other, and the liquid crystal molecules interposed between the pair of electrode substrates form a helical structure having a twist angle of 90°. Since the applied voltage threshold required to switch the liquid crystal material is indefinite in liquid crustal display devices of TN type, the device has a drawback that contrast is reduced as the number of scanning lines is increased.

A liquid crystal display device of STN type has almost the same composition as a device of TN type except that the liquid crystal molecules disposed between the pair of substrates form a helical structure having a twist angle in the range of 180° to 270°. The applied voltage threshold value required to switch the liquid crystal is more definite in a device of STN type than in a device of TN type. However, since a liquid crystal display device of STN type makes use of the anisotropy of the refractive index of the liquid crystal material, displays in black and white can not be obtained. Therefore, conventionally the two colored display of an STN type device is changed to a display in black and white by the use of an optical compensation panel. In order to produce a gradation display, a method of controlling the applied voltage has been used.

In order to produce a color display, usually color filters have been incorporated into a liquid crystal display device of STN type. Generally, a printing method, a photolithography method, or the like is used as a method for producing color filters. However, irrespective of what methods are used, the yields during production of three kinds of filters (red, green, blue) are low, so that the cost of production rises. Furthermore, if the produced filters are used over a long time period, the filters are discolored. For these reasons, there is a requirement to develop an improved liquid crystal display device in which color displays can be obtained without filters.

A liquid crystal color display panel having color filters therein also suffers from the drawback that it is impossible to correct the change of color caused by changes in the surrounding temperature. Since the thickness d of the panel is virtually constant irrespective of temperature change, the retardation of the liquid crystal material, defined as ($\Delta n \times d$) where $\Delta n$ represents the anisotropy of the refractive index of the liquid crystal material and $\Delta n = n_o - n_e$ where $n_o$ is the refractive index for the ordinary ray and $n_e$ is the refractive index for the extraordinary ray, becomes small as the temperature of the surroundings rises. This is because when the temperature rises, $\Delta n$ generally becomes smaller. For this reason, the transmissivity of the display to light changes and thereby the color of the color display changes.

### OBJECTS AND SUMMARY OF THE INVENTION

It is thus the principal object of the present invention to overcome or at least substantially reduce the above-described problems and thereby enable the provision of a liquid crystal device for actualizing a color display.

It is another, more specific object of the present invention to provide a liquid crystal color display device by means of which a color gradation display may be obtained.

It is a further, more specific object of the present invention to provide a liquid crystal color display device in which changes of displayed color caused by temperature change can be corrected.

According to the present invention there is provided a liquid crystal color display device comprising means providing a black and white display and a liquid crystal color panel operatively associated with said black and white display means for selectively converting said black and white display into a color display, said liquid crystal color panel having a transmissivity for different light wavelengths which is selectable as a function of applied voltage.

An exemplary liquid crystal color display device according to the present invention which is described in detail hereinafter has a display panel in which a pair of substrates are provided with electrodes and nematic liquid crystal material having positive dielectric anisotropy to which optically active substances are added is interposed between the pair of substrates. The liquid crystal molecules interposed between the pair of substrates form a helical structure having a twist angle in the range of $180°$ to $270°$. The display device further comprises a means for optical compensation, a color panel in which a liquid crystal material is interposed between a further pair of substrates provided with electrodes, and polarizing means. The liquid crystal material in the color panel can have a positive dielectric anisotropy and be oriented homogeneously or a negative dielectric anisotropy and be oriented homeotropically. When different voltages are applied to the electrodes of the color panel, the orientation of the liquid crystal molecules disposed between the electrodes changes as a function of the magnitude of the applied voltage. When light incident on the color panel passes through the differently oriented liquid crystal molecules, the wavelength corresponding to the peak of transmissivity of the light depends on the orientations of the liquid crystal molecules. Utilizing the above facts, a color display can be produced.

In a conventional display device composed of a display panel and a means for optical compensation a gradation display in black and white can be obtained, so that, by combining such a display panel and optical compensation means with a color panel, a color gradation display can be obtained.

In order to compensate for changes in the color displayed in a liquid crystal color display device according to the present invention which are caused by temperature changes, the voltages applied between the electrodes of the color panel may be adjusted as a function of temperature to correspondingly adjust the orientation of the liquid crystal molecules and thereby compensate for the temperature induced color changes.

The above and further features of the present invention are set forth with particularity in the appended claims and will become clear to those possessed of appropriate knowledge and skills from consideration of the following description given with reference to the accompanying drawings.

BRIEF DESCRIPTION OF THE DRAWINGS

Fig. 1 is a schematic cross-sectional view of a liquid crystal color display device according to a first embodiment of the present invention;

Figs. 2(A) and 2(B) are schematic views showing different conditions of liquid crystal molecules subjected to different applied voltages in a color panel according to the present invention;

Figs. 3(A), 3(B) and 3(C) are graphical views showing the relationship between wavelength of light and transmissivities of light under different applied voltage conditions;

Figs. 4(A) and 4(B) are graphical views showing the relationship between voltages applied between electrodes on a color panel and transmissivities of light; and

Fig. 5 is a cross sectional view of a further embodiment of liquid crystal color display device according to the present invention.

DETAILED DESCRIPTION OF THE EMBODIMENTS

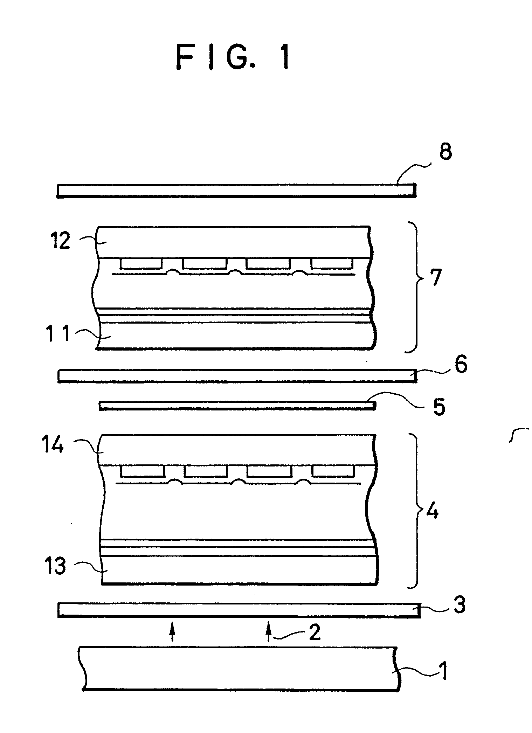

First of all, a liquid crystal color display device according to the present invention will be described wherein a liquid crystal material having positive dielectric anisotropy is provided and oriented homogeneously in the color panel. Fig. 1 is a cross-sectional view of such a liquid crystal color display device according to a first embodiment of the present invention.

In Fig. 1, light 2 from a light source 1 passes through a polarizing plate 3 to become linearly polarized light. Then the light passes through a display panel 4. By virtue of the light transmitted through the display panel 4, a yellow mode display or a blue mode display is obtained. However, a multi-color display cannot be obtained from a yellow mode or blue mode display, so therefore a means for optical compensation (an optical compensation film 5 in the embodiment of Fig. 1) is provided, and the light from display panel 4 passes through the optical compensation means 5 and subsequently through a polarizing plate 6, whereby a display in black and white is obtained. After this, the light passes through a color panel 7 and subsequently through a polarizing plate 8, whereby a color display is obtained as will be explained hereinafter.

The display panel 4 preferably comprises a nematic liquid crystal containing a chiral ingredient which is interposed between a pair of transparent substrates provided with orthogonally arranged transparent electrodes defining pixels at their cross-over points, and the liquid crystal molecules interposed between the pair of substrates preferably form a helical structure having a twist angle in the range of 180° to 270°. However, the display panel in the present invention is not limited to STN type, but TN type or ferroelectric liquid crystal type can also be utilized. A liquid crystal panel of usual TN type is suitable for a small-sized display, and a liquid crystal panel of ferroelectric liquid crystal type has a superior high speed response. However, it is impossible to produce a black and white display by using only the display panel, so that a means for optical compensation, e.g. a liquid crystal panel in which the liquid crystal molecules are oriented in the opposite direction to those of the display panel, or one or more macromolecular films having anisotropy of refractive index, or the like, must be disposed on one or both sides of the display panel.

In a conventional liquid crystal display device consisting of a display panel and means for optical compensation, by controlling the driving voltage a black and white display and also a gradation display can be obtained. The present invention makes it possible to obtain a multi-color display by uniting a color panel with such a conventional liquid crystal device.

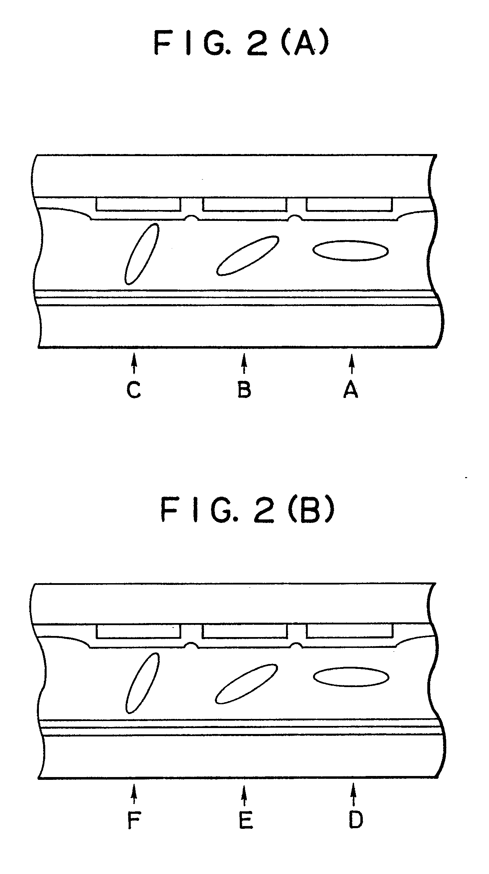

The color panel 7 in the embodiment of Fig. 1 is composed of a substrate provided with electrode strips, a substrate provided with a transparent electrode (common electrode) over its whole surface, and a liquid crystal material having a positive dielectric anisotropy which is interposed between the substrates and oriented homogeneously. This liquid crystal material may be any conventional liquid crystal having positive dielectric anisotropy. The widths of the electrode strips provided in the color panel 7 and the widths of the electrode strips provided in the display panel 4 are substantially the same in this particular embodiment. When voltages are applied between the common electrode and respective ones of the electrode strips, the liquid crystal molecules at such locations take up conditions A, B, or C according to the magnitude of the applied voltages as shown in Fig. 2(A). However, since it is undesirable to apply a DC voltage to the liquid crystal for a long time period, it is preferred that an alternative pulsed voltage is used. Since the angles between the liquid crystal molecules and the substrates are different for the three kinds of conditions A, B, C, therefore Δn (anisotropy of refractive index) will be different for the three kinds of conditions A, B and C. The color of the light that will be transmitted through the color panel 7 at any specific location largely depends on the retardation (Δn x d) of the liquid crystal at that location where d is the thickness of the liquid crystal layer, so that the color of light that will be transmitted at respective locations where the liquid crystal molecules have different ones of the three kinds of conditions A, B and C will correspondingly be different. With this embodiment one picture element of the full color display obtained from the color panel will correspond to three picture elements of the display panel, that is to say each picture element of the full color display is made up of the display obtained by displaying through the color panel three picture elements of the display panel and controlling the red, green, and blue colorations achieved by the color panel at the same time. Thus, the described embodiment makes it possible to provide a full color display from a black and white display.

In the practice of the present invention, the surfaces of the substrates contiguous to the liquid crystal in both the display panel and the color panel may be provided with means for preferentially orienting the liquid crystal molecules, and polarizing plates may be disposed on both sides of the display panel and on both sides of the color panel, i.e. four polarizing plates in total may be used. Alternatively, three polarizing plates in total may be used, since it is sufficient to provide only one polarizing plate between the display panel and the color panel.

Hereinbefore there is described the case where a liquid crystal material having positive dielectric anisotropy is used in the color panel and is homogeneously oriented. A liquid crystal color display device having a color panel in which a liquid crystal material having a negative dielectric anisotropy is used and is homeotropically oriented will have the same composition and achieve the same result as the above liquid crystal color display device except that the liquid crystals disposed in the color panel and the orientation directions of the liquid crystal molecules in the color panel are different. As a liquid crystal material having negative dielectric anisotropy and homeotropical orientation, any conventional liquid crystal having negative dielectric anisotropy may be used. When voltages are applied between electrodes formed in a color panel having a negative dielectric anisotropy liquid crystal oriented homeotropically, the directions of the liquid crystal molecules interposed between the electrodes change to the directions indicated as D, E, and F in Fig. 2(B), for example.

Since color filters are not used in the liquid crystal color display device of the present invention, the need for an apparatus to produce color filters is obviated. Also the color panels and the display panels can be manufactured by use of the same apparatus. Therefore, the cost can be greatly reduced in mass production of color displays.

When the surrounding temperature changes, compensation can be readily effected since the value of the voltage applied between the common electrode and the electrode strips in the color panel can be changed so as to change the anisotropy of refractive index of the liquid crystal material and consequently effect a color compensation for the change of color caused by the temperature change.

Referring more particularly to Fig. 1, in manufacturing the display panel 4 a substrate 13 made from a soda-lime glass had deposited thereon a transparent ITO (indium tin oxide) electrode film by sputtering for example and this film was then patterned into electrode strips. Subsequently a thin polyimide film was formed over the electrode strips to serve as an orientation film for appropriately orienting the liquid crystal molecules. This substrate was mated with a substrate 14 made from soda-lime glass on which transparent electrode strips (ITO), an orientation film, and spacers (formed for example of SiO$_2$ grains of 6$\mu$m diameter and omitted in the drawing) were applied, with the electrodes on the substrate 13 arranged orthogonally to the electrodes on the substrate 14 so as to define pixels at the cross-over points. Then liquid crystal was injected between the substrates, whereby the display panel 4 in Fig. 1 was completed. The rubbing directions of the respective orientation films were at an angle of 240° to each other.

The color panel 7 was constituted by mating a substrate 11 made from soda-lime glass, on which were formed a transparent electrode and an orientation film for orienting the liquid crystal molecules, with a substrate 12 made from soda-lime glass on which were also formed a transparent electrode and an orientation film. Then liquid crystall e.g. nematic liquid crystal or ferroelectric liquid crystal, is injected between the spaced apart substrates. The transparent electrode formed on the substrate 11 was not patterned and was used as a common electrode, and the electrode formed on the substrate 12 was patterned into strips having the same width as the electrode strips formed in the display panel. Polyimide films were used as the orientation films in order to orient the liquid crystal molecules in a direction parallel to the substrates. That is, homogeneous alignment was used for the color panel 7.

Polarizing plates 3 and 8 were disposed outside of the substrate 13 and the substrate 12. Further, a polarizing plate 6 was disposed between the display panel 4 and the color panel 7. In this embodiment the polarizing plate 6 was disposed on the underside of the color panel 7. The polarizing plate 3 disposed on the underside of the display panel 4 may equally well be disposed directly on the light source 1.

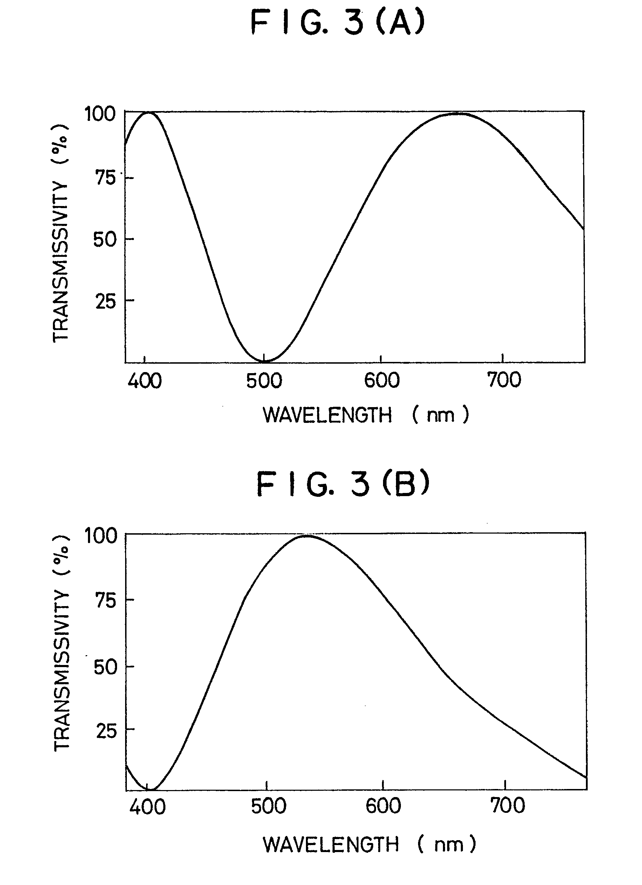

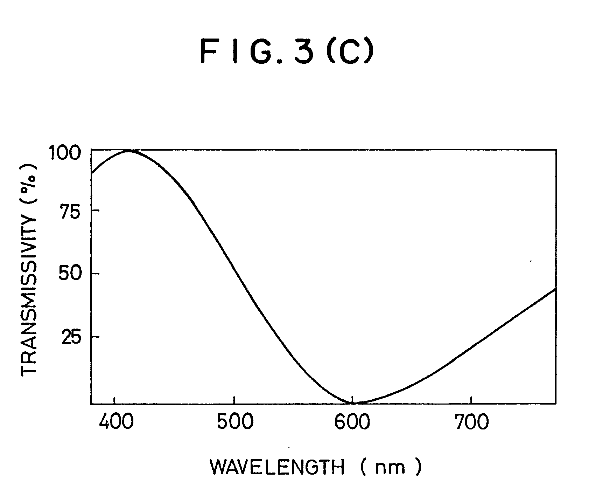

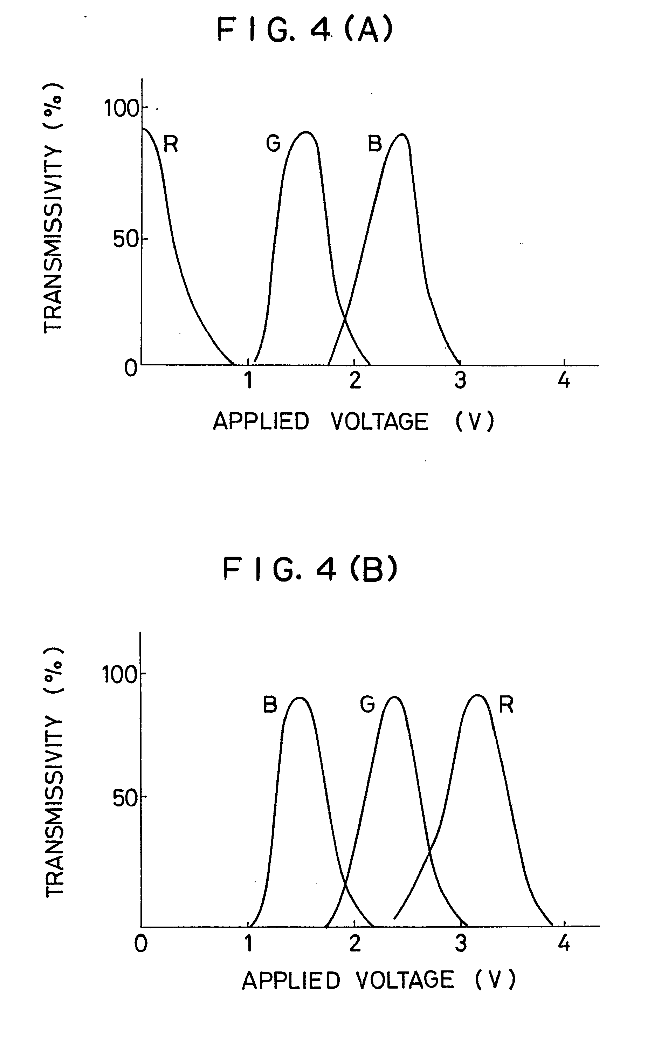

In use of the color display device according to the present invention which is shown in Fig. 1, light is transmitted through the display panel 4, through the optical compensation film 5, and through the polarizing plate 6 and enters the color panel 7. Three different pulsed voltages of 0V, ±1.5V, and ±2.4V (whose frequencies are 70Hz) are applied to respective ones of every three electrode strips formed in the color panel. By application of such voltages, the liquid crystal molecules to which the three voltages are applied are set in the conditions A, B, and C shown in Fig. 2(A) respectively. Since the anisotropies of refractive index for the conditions A, B, and C are different, thus the colors of light transmitted in the three electrode strips can be made red, green, and blue respectively. Curves showing the transmissivity of light under the conditions A, B, and C in Fig. 2(A) are shown in Figs. 3(A) to (C), respectively. The liquid crystal molecules adopt condition A when no voltage is applied thereto, and adopt condition B when a voltage of ±1.5V is applied thereto, and condition C when a voltage of ±2.4V is applied. In Fig. 3(A) the peak around 640 to 650nm corresponds to red light. Retardation ($\Delta$n x d) for condition A is 1000nm. In Fig. 3(B) the peak around 540nm corresponds to green light. Retardation for condition B is 800nm. In Fig. 3(C) the peak around 400nm corresponds to blue light. Retardation for condition C is 600nm. The transmissivities of red light (640nm), green light (540nm), and blue light (440nm) through the color panel as a function of applied voltage are shown in Fig. 4(A).

As described hereinbefore, by application of voltages of 0V, ±1.5V, ±2.4V, 0V, ±1.5V, ±2.4V, ... etc. to respective ones of the electrode strips formed in the color panel from one end of the panel to the other in sequential order, the black and white display produced by the light passed through the optical compensation film can be converted into a color display such as red, green, blue, red, green, blue, ... etc. Vivid color displays were found to be obtainable with this embodiment in a temperature range of from 10°C to 20°C. In this embodiment, optical compensation was effected by use of a macromolecular film exhibiting anisotropy of its refractive index. By making use of a plurality of such macromolecular films in one display device, still more vivid color displays can be obtained.

In the embodiment described above, one of the substrates of the color panel has a common electrode formed thereon and the other substrate has formed thereon a plurality of electrode strips, all extending parallel to each other in a direction corresponding to the direction of one of the sets of pixel-defining electrodes provided in the display panel. It is to be appreciated however that the described arrangement is exemplary only and that other electrode arrangements are possible for the color panel. It would, for example, be possible to have both electrodes of the color panel formed as electrode strips with the strips on the two substrates orthogonally arranged in a matrix format defining pixels at their cross-over points, as in the display panel, so that each pixel of the color panel is driven by application of voltages to the corresponding row and column of the matrix. Alternatively the pixels of the color panel could be defined each by individual electrodes arranged to be individually and selectively driven in a so-called static driving arrangement by its own voltage application means. Furthermore whereas in the embodiment described above the proposal is to apply different voltages to different electrodes of the color panel so that the color panel displays red, green, blue, red, green, blue, ... etc at different electrode locations, such an arrangement again is exemplary only and in an alternative arrangement each electrode irrespective of its configuration could be addressed serially and at a relatively high frequency, for example by means of a step voltage train which could advantageously be bipolar (stepping for example between OV, +1.5V, +2.4V, OV, -1.5V, -2.4V, OV, +1.5V ... etc), so that the portion of the color panel corresponding to each electrode could sequentially color the display from the display panel red, green, blue, red, green, blue ... etc. By fine control of the serial voltages applied to the color panel, it becomes possible for each picture element of the color panel selectively to provide a full range of color displays.

The color panel 7 of the above described embodiment could alternatively use thin films of a coupling agent such as SURFINE-150, manufactured by Dainippon Ink & Chemicals Co.,Ltd., for example in place of the polyimide films as the orientation films. This has the result that the liquid crystal molecules are oriented in a direction perpendicular to the substrates, namely homeotropic alignment is used for the color panel 7. With all other constructional details unchanged, in use of such an alternative arrangement, different pulsed voltages of ±1.5V, ±2.4V, and ±3.2V (whose frequencies are 70 Hz) for example may be applied to respective ones of every three electrode strips formed in the color panel. Thereby, liquid crystal molecules to which the alternative pulsed voltages of ±1.5V, ±2.4V, and ±3.2V are applied are set in the conditions of D, E, and F shown in Fig. 2(B), respectively. By virtue of the anisotropy of the refractive index of the color panel 7, the conditions D, E and F correspond to different colors of light transmitted by the color panel 7 namely blue, green, and red respectively, the transmissivity curves of the light for the conditions D, E, and F being shown in Fig. 3(A), (B) and (C), respectively as described hereinbefore.

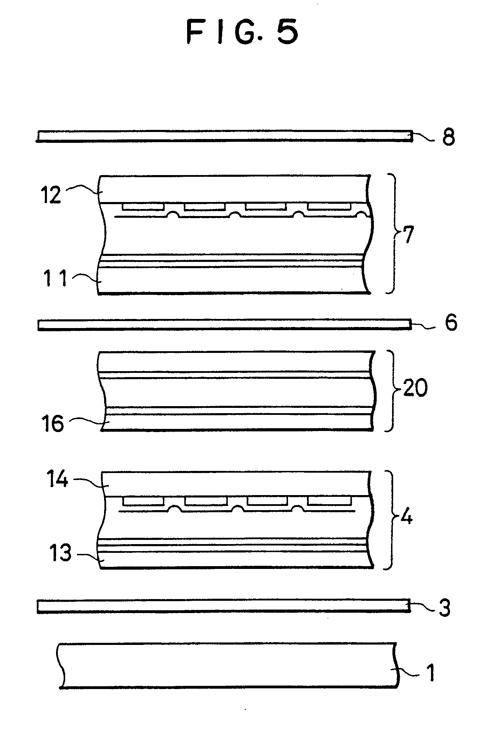

Referring now to Fig. 5, where the same reference numerals as are used in Fig. 1 denote like parts, there is shown a cross-sectional view of a liquid crystal color display device according to a second embodiment of the present invention. This embodiment is the same as that of Fig. 1 except that optical compensation is achieved by means of a liquid crystal panel 20 disposed between the display panel 4 and the color panel 7. This optical compensation panel 20 has almost the same composition as that of the display panel 4 except that no electrodes are provided since there is no requirement to apply voltages to the liquid crystal material provided in the optical compensation panel. The liquid crystal molecules disposed in the liquid crystal panel 20 are oriented in a direction opposite to their orientation direction in the display panel, the liquid crystal molecules having a twist angle in the range of -180° to -270°. Further, in Fig. 5 the substrate 14 in the display panel and the substrate 16 in the optical compensation panel 20 were rubbed in respective rubbing directions at an angle of 90° to each other.

In the case of Fig. 1 where a macromolecular film is used as a means for optical compensation the situation arises when the surrounding temperature changes that light which passed through the display panel and through the optical compensation means is slightly colored and thereby the precision of optical compensation is reduced. This is caused by expansion or contraction of the film, change of anisotropy of the refractive index of the liquid crystal, and the like. On the contrary, in the case where a liquid crystal panel is used as a means for optical compensation as in the embodiment of Fig. 5, even if the surrounding temperature changes so as to influence the display panel, the optical compensation panel will also be influenced at the same time and these two panels will optically compensate each other. Consequently, in the arrangement of Fig. 5 the precision of optical compensation is not reduced by temperature changes and vivid color displays could be obtained over a wide temperature range of from 0°C to 25°C.

As described above, a liquid crystal panel can be used as the optical compensation means and has the advantageous affect that even if ambient temperature changes influence the display panel, vivid color displays can still be obtained over a wide temperature range. Additional or alternative temperature compensation can be achieved by adjustment of the voltages applied between the common electrode and the electrode strips formed in the color panel so as to obtain more stable color displays in the face of ambient temperature changes. So long as phase transition of the liquid crystal used in the color liquid crystal display device in the present invention does not take place, vivid color displays can be obtained by this means over a wide temperature range.

As an experiment, the ambient temperature was changed intentionally and the applied pulsed voltages (at frequencies of 70Hz) were varied until red, green, and blue displays were obtained. The pulsed voltages versus the ambient temperatures are shown in Table 1 below.

TABLE 1

|  | red | green | blue |
|---|---|---|---|
| 0°C | OV | 1.5V | 2.4V |
| 10°C | OV | 1.5V | 2.4V |
| 20°C | OV | 1.5V | 2.4V |
| 30°C | 0.2V | 1.6V | 2.6V |
| 40°C | 0.5V | 1.8V | 2.7V |
| 50°C | 0.7V | 2.0V | 2.9V |

The above described possibility of using thin films of coupling agent as orientation films in the color panel is available to the embodiment of Fig. 5 and gives rise to the further possibility of achieving temperature compensation by variation of the voltages applied to the electrodes of the color panel as just described hereinabove. Thus in a further series of experiments, the ambient temperature was changed intentionally, and the applied pulsed voltages (at frequencies of 70Hz) were varied so as to achieve red, green, and blue displays. The pulsed voltages versus the ambient temperature are shown in Table 2 below:

Table 2

|  | red | green | blue |
|---|---|---|---|
| 0°C | 3.2V | 2.4V | 1.5V |
| 10°C | 3.2V | 2.4V | 1.5V |
| 20°C | 3.2V | 2.4V | 1.5V |
| 30°C | 3.3V | 2.6V | 1.6V |
| 40°C | 3.5V | 2.7V | 1.8V |
| 50°C | 3.7V | 2.9V | 2.0V |

Having described the present invention in the foregoing with reference to specific embodiments it is to be well appreciated that the described embodiments are in all respects exemplary and that modifications and variations will occur to those possessed of appropriate skills without departure from the true spirit and scope of this invention as set forth in the appended claims. For example, whereas in the foregoing there has been described liquid crystal color display devices in which the display panel is disposed between the color panel and the light source, it is to be understood that the color panel could alternatively be disposed between the display panel and the light source. Furthermore whereas in the foregoing it has been said that the rubbing direction on the substrate 16 of the optical compensation panel and the rubbing direction on the substrate 14 of the display panel 4 are at an angle of about 90° to each other, they may instead be at an angle of from 80° to 100°. Moreover the applied voltages quoted hereinbefore are exemplary only and different applied voltages will be required to accommodate differences from the described exemplary embodiments, for example where different liquid crystal materials are used.

## Claims

1. A liquid crystal color display device comprising means providing a black and white display and a liquid crystal color panel operatively associated with said black and white display means for selectively converting said black and white display into a color display, said liquid crystal color panel having a transmissivity for different light wavelengths which is selectable as a function of applied voltage.

2. A liquid crystal color display device according to claim 1 wherein said black and white display means comprises a liquid crystal display.

3. A liquid crystal color display device according to claim 2 wherein optical compensation means are associated with the liquid crystal display of the black and white display means, said optical compensation means serving to convert the output of said liquid crystal display into a black and white display.

4. A liquid crystal color display device according to claim 3 wherein said optical compensation means comprises a macromolecular film or a plurality of macromolecular films.

5. A liquid crystal color display device according to claim 3 wherein said optical compensation means comprises a liquid crystal layer.

6. A liquid crystal color display device according to any of claims 2 to 5 wherein the liquid crystal display of the black and white display means comprises a twisted nematic or super twisted nematic type liquid crystal display.

7. A liquid crystal color display device according to any of claims 2 to 5 wherein the liquid crystal display of the black and white display means comprises a ferroelectric type liquid crystal display.

8. A liquid crystal color display device according to any of the preceding claims wherein the liquid crystal color panel comprises liquid crystal material having positive or negative dielectric anisotropy oriented homogeneously or homeotropically respectively.

9. A liquid crystal color display device comprising a first display panel and a second color panel, said first display panel comprising a pair of substrates provided with respective electrodes and a nematic liquid crystal material having a positive dielectric anisotropy and including one or more optically active substances disposed between said pair of substrates and forming a helical structure having a twist angle within the range of $180^\circ$ to $270^\circ$, and said second color panel comprising a pair of substrates provided with respective electrodes and a liquid crystal material disposed between said pair of substrates and having a transmissivity:wavelength characteristic which is a function of the voltage applied between its associated electrodes, the arrangement being such that by application of appropriate voltages to the color panel a display produced by the display panel can be selectively colored.

10. A liquid crystal color display device according to claim 9 wherein the liquid crystals provided in said second color panel are caused to be oriented in different directions by application of different voltages between the electrodes of the color panel, and different orientations of the liquid crystal molecules provide peak transmissivity at different wavelengths of light.

11. A liquid crystal color display device according to claim 10 wherein said different directions are predetermined in order to enable preferential transmission of red, blue and green wavelengths by ssaid liquid crystal color display device.

12. A liquid crystal color display device according to claim 10 or 11 wherein the liquid crystal material in the color panel is such as to enable the effects of ambient temperature changes on the colors of the display to be compensated by adjustment of the voltages applied to the liquid crystal color panel.

13. A liquid crystal color display device according to any of claims 9 to 12 wherein optical compensation means is associated with said display panel and comprises at least one macromolecular film exhibiting anisotropy of refractive index.

14. A liquid crystal color display device according to any of claims 9 to 12 wherein optical compensation means is associated with said display panel and comprises a liquid crystal panel comprising a pair of substrates and a nematic liquid crystal material having a positive dielectric anisotropy and including one or more optically active substances therein, the nematic liquid crystals of said optical compensation panel forming a helical structure having a twist angle in the range of $-180^\circ$ to $-270^\circ$.

15. A liquid crystal color display device according to any of claims 9 to 14 wherein one of the substrates of the color panel has a common transparent electrode formed thereon and the other has a plurality of transparent electrode strips.

# F I G. 1

# F I G. 2 (A)

C        B        A

# F I G. 2 (B)

F        E        D

# F I G. 3 (A)

Graph: TRANSMISSIVITY (%) vs WAVELENGTH ( nm )

# F I G. 3 (B)

Graph: TRANSMISSIVITY (%) vs WAVELENGTH ( nm )

# F I G. 3 (C)

# F I G. 4 (A)

# F I G. 4 (B)

13

# F I G. 5